Europäisches Patentamt

(19) European Patent Office

Office européen des brevets

(11) Veröffentlichungsnummer: **0 088 335**
**B1**

(12) **EUROPÄISCHE PATENTSCHRIFT**

(45) Veröffentlichungstag der Patentschrift:
03.09.86

(51) Int. Cl.⁴: **A 47 J 31/06**

(21) Anmeldenummer: **83101973.2**

(22) Anmeldetag: **01.03.83**

(54) Brühtrichter für eine Kaffeemaschine.

(30) Priorität: **10.03.82 DE 3208623**

(43) Veröffentlichungstag der Anmeldung:
**14.09.83 Patentblatt 83/37**

(45) Bekanntmachung des Hinweises auf die Patenterteilung:
**03.09.86 Patentblatt 86/36**

(84) Benannte Vertragsstaaten:
**AT CH FR GB IT LI NL**

(56) Entgegenhaltungen:
**FR-A-2 142 885**
**GB-A-1 013 110**
**US-A-2 558 062**
**US-A-2 707 622**

(73) Patentinhaber: **Patzner GmbH + Co., Buchener Strasse 15, D-6990 Bad Mergentheim (DE)**

(72) Erfinder: **Greiwe, Hans- Dieter, Lerchenweg 3, D-6973 Boxberg (DE)**

(74) Vertreter: **Reinländer & Bernhardt Patentanwälte, Orthstrasse 12, D-8000 München 60 (DE)**

EP 0 088 335 B1

## Beschreibung

Die Erfindung betrifft einen Brühtrichter für eine Kaffeemaschine nach dem Oberbegriff des Anspruchs 1, der zum Stand der Technik gehört.

Der Siebeinsatz im Brühtrichter wird für eine Brühung mit Kaffeemehl gefüllt und der Brühtrichter wird dann an den Brühkopf der Kaffeemaschine angesetzt, meist durch eine Schwenkbewegung festgelegt. Nach dem Brühvorgang wird der Brühtrichter von der Kaffeemaschine abgenommen und der Kaffeesatz aus dem Siebeinsatz entfernt.

In Kaffeemaschinen insbesondere für gewerbliche Zwecke kann der Kaffee unter Druck bereitet werden, sogenannter Espresso. Für verschiedene Brühmengen sind dabei verschiedene Siebeinsätze erforderlich. soll an einer Kaffeemaschine nur mit einem Brühtrichter gearbeitet werden, müssen die Siebeinsätze auswechselbar sein. Andererseits ist es aber erforderlich, daß der Siebeinsatz im Brühtrichter fest hält, weil nach der Brühung der Kaffeesatz aus dem Siebeinsatz herausgeschlagen werden muß, da er wegen seines feuchten Zustands am Siebeinsatz haftet.

Bei einem bekannten Brühtrichter besteht die Verrastung für den Siebeinsatz aus einem in einer Nut der Trichterwand liegenden Federring, der beim Eindrücken des Siebes in den Brühtrichter in eine umlaufende Rille des Siebeinsatzes einrastet. Für die Herausnahme des Siebes aus dem Trichter ist ein Werkzeug erforderlich.

Andererseits ist auch ein Brühtrichter bekannt, in dem der Siebeinsatz lose liegt. Ein über das Sieb einseitig greifender, an dem Brühtrichter schwenkbar gelagerter Sicherungshebel verhindert das Herausfallen des Siebes aus dem Brühtrichter vor dem Brühen. Beim Ansetzen des Brühtrichters an den Brühkopf der Kaffeemaschine schwenkt der Sicherungshebel zurück, was dazu führen kann, daß der Siebeinsatz bei Abnehmen des Brühtrichters von dem Brühkopf an der Dichtung des Brühkopfs kleben bleibt, was vor allem beim Brühen von Espresso wegen des hohen Brühdrucks auftreten kann. Auch müssen bei den bekannten Brühtrichtern die Siebeinsätze maßlich exakt an den Brühtrichter angepaßt sein.

Der Erfindung liegt die Aufgabe zugrunde, einen Brühtrichter für eine Kaffeemaschine zu schaffen, dessen Siebeinsatz einerseits, ohne exakt bemessen zu sein, in dem Brühtrichter während des Betriebs fest hält und andererseits nach dem Betrieb leicht ausgewechselt werden kann. Gelöst wird diese Aufgabe durch die Merkmale des Anspruchs 1. Weiterbildungen der Erfindung sind in den Unteransprüchen angegeben.

Die erfindungsgemäße Ausbildung des Brühtrichters eignet sich vor allem für eine Kaffeemaschine zum Bereiten von kleinen Mengen, z.B. 1 oder 2 Tassen, weil hierbei ein hoher Arbeitsaufwand wegen des häufigen Wechselns der Siebeinsätze nötig ist.

Das Druckstück drückt den Siebeinsatz gegen die Innenwand des Brühtrichters an der gegenüberliegenden Seite, d.h. es ergibt sich eine zweiseitige Halterung.

Der Siebeinsatz muß mit seinem Durchmesser nicht exakt an den Durchmesser des Brühtrichters angepaßt sein, sondern kann vielmehr mit merklichem Spiel einen kleineren Durchmesser aufweisen.

Die Erfindung wird beispielhaft anhand der Zeichnung erläutert, in der sind

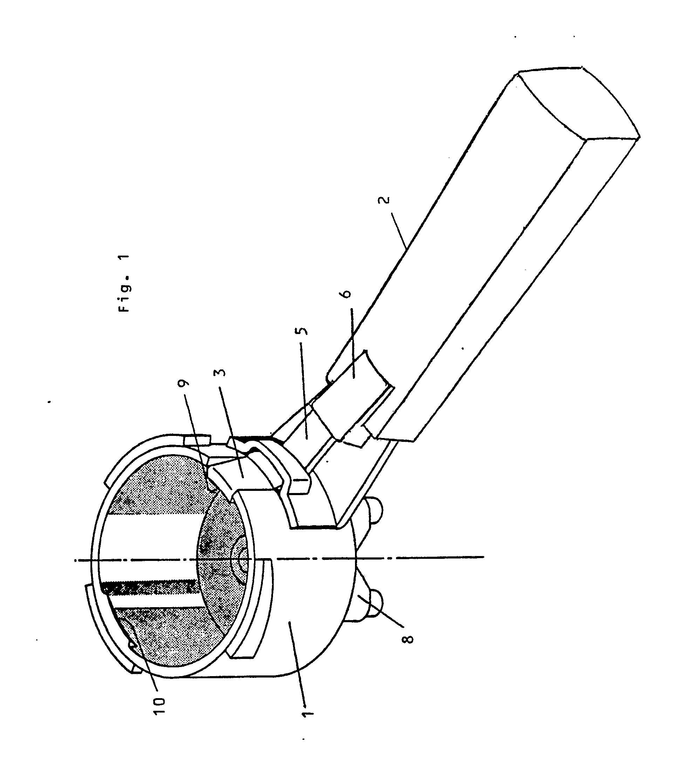

Fig. 1 eine perspektivische Ansicht des Brühtrichters der Erfindung und

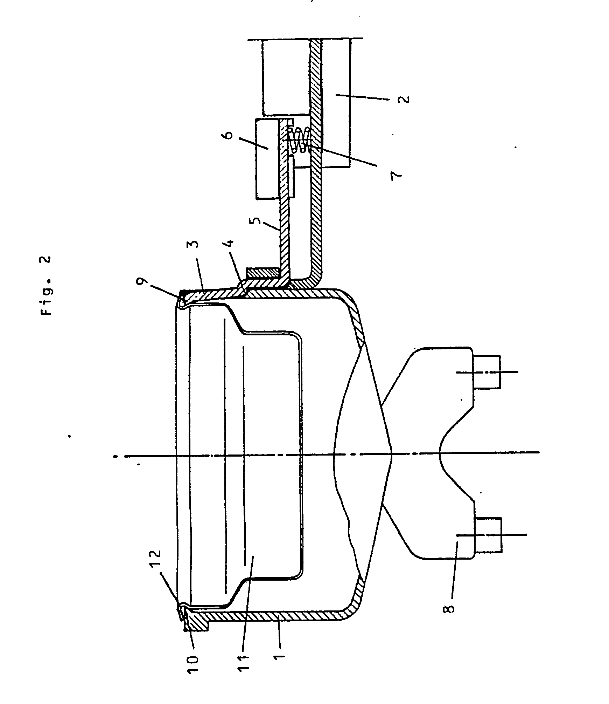

Fig. 2 ein Schnitt durch den Brühtrichter mit eingesetzem Sieb in größerem Maßstab.

Der Brühtrichter 1 ist mit einem Griff 2 versehen. In einer Aussparung in dem oberen Teil der Wand des Brühtrichters liegt ein Druckstück 3, das um die Achse 4 schwenkbar ist. Das Druckstück verlängert sich über die Schwenkachse hinaus in einen Hebel 5, an dem ein in einer Aussparung des Griffs 2 liegender Betätigungsknopf 6 angebracht ist. Zwischem dem Hebel 5 und dem Griff 2 sitzt eine Druckfeder 7. Der Brühtrichter ist des weiteren mit einem Kaffeeauslauf 8 versehen.

Das Druckstück 3 ist am oberen Rand mit einer Nase 9 versehen. Dieser liegt eine weitere, an dem Brühtrichter 1 angebrachte Nase 10 gegenüber. In dem Brühtrichter liegt der Siebeinsatz 11, der am oberen Rand eine umlaufende Rille 12 aufweist, in welche die Nasen 9 und 10 unter der Druckwirkung der Feder 7 einrasten, so daß der Siebeinsatz fest im Brühtrichter hält. Zum Auswechseln des Siebeinsatzes 11 drückt die Bedienungsperson auf den Knopf 6 entgegen der Feder 7, wodurch das Druckstück 3 von dem Siebeinsatz 11 abschwenkt und die Nase 9 aus der Rille 12 tritt, womit beim Umdrehen des Brühtrichters der Siebeinsatz aus dem Brühtrichter fallen kann.

## Patentansprüche

1. Brühtrichter (1) für eine Kaffeemaschine, in den ein Sieb (11) einsetzbar ist, das nahe dem oberen Rand eine Rille (12) aufweist, in die eine federnde Verrastung des Brühtrichters eingreift, dadurch gekennzeichnet, daß die Verrastung (3, 7, 9, 10, 12) durch ein von Hand betätigtes, zum Brühtrichter (1) bewegliches Druckstück (3) lösbar ist und daß der Brühtrichter (1) an der dem Druckstück (3) gegenüberliegenden Seite mit einer in die Rille (12) des Siebeinsatzes (11) einrastenden Nase (10) versehen ist.

2. Brühtrichter nach Anspruch 1, dadurch gekennzeichnet, daß das Druckstück (3) durch eine Druckfeder (7) vorgespannt ist.

3. Brühtrichter nach Anspruch 1 oder 2, dadurch gekennzeichnet, daß das Druckstück (3) am Brühtrichter (1) gelenkig gelagert (4) ist.

4. Brühtrichter nach einem der Ansprüche 1 bis 3 mit einem Griff, dadurch gekennzeichnet, daß an dem Griff (2) ein mit dem Druckstück (3) verbundener Handbetätigungsknopf (6) angebracht ist.

5. Brühtrichter nach einem der Ansprüche 1 bis 4, dadurch gekennzeichnet, daß das Druckstück (3) mit einer in die Rille (12) des Siebeinsatzes (11) einrastenden Nase (9) versehen ist.

## Claims

1. A brewing unit (1) for a coffee machine, into which a screen (11) can be inserted which has near its upper edge a groove (12) into which a resilient locating device of the brewing unit engages, characterized in that the locating device (3, 7, 9, 10, 12) can be disengaged by a manually operated pressure piece (3) which is movable in regard to the brewing unit (1), and that the brewing unit (1) is provided, on the side opposite to the pressure piece (3), with a cam (10) engaging into the groove (12) of the screen insert (11).

2. A brewing unit according to claim 1, characterized in that the pressure piece (3) is biased by a compression spring (7).

3. A brewing unit according to claim 1 or 2, characterized in that the pressure piece (3) is arranged pivotedly (4) at the brewing unit (1).

4. A brewing unit according to one of the claims 1 to 3 with a handle, characterized in that a manually operated knob (6) connected with the pressure piece (3) is fixed at the handle (2).

5. A brewing unit according to one of the claims 1 to 4, characterized in that the pressure piece (3) is provided with a cam (9) engaging into the groove (12) of the screen insert (11).

## Revendications

1 - Groupe infuseur (1) pour machine à café, dans lequel peut être mise en place une cartouche filtrante (11) qui présente près de son bord supérieur une gorge (12) dans laquelle s'engage un dispositif de mise en prise élastique du groupe infuseur, caractérisé en ce que le dispositif de mise en prise (3, 7, 9, 10, 12) peut être dégagé par un élément presseur (3) susceptible d'être manoeuvré manuellement et mobile par rapport au groupe infuseur (1) et en ce que le groupe infuseur (1) est muni, du côté opposé à l'élément presseur (3), d'un nez (10) venant en prise dans la gorge (12) de la cartouche filtrante (11).

2 - Groupe infuseur selon la revendication 1, caractérisé en ce que l'élément presseur (3) est soumis à une tension initiale par un ressort de compression (7).

3 - Groupe infuseur selon la revendication 1 ou 2, caractérisé en ce que l'élément presseur (3) est monté en (4) de manière articulée sur le groupe infuseur (1).

4 - Groupe infuseur selon l'une quelconque des revendications précédentes comportant une poignée, caractérisé en ce que sur la poignée (2) est prévu un bouton de manoeuvre manuelle (6) relié à l'élément presseur (3).

5 - Groupe infuseur selon l'une quelconque des revendications précédentes, caractérisé en ce que l'élément presseur (3) est muni d'un nez (9) venant en prise dans la gorge (12) de la cartouche filtrante (11).

Fig. 1

Fig. 2